# FASCICULE DE BREVET EUROPEEN

(11) **EP 0 823 205 B1**
(45) Date de publication et mention de la délivrance du brevet: **31.03.1999**
(21) Numéro de dépôt: 97401427.6
(22) Date de dépôt: 20.06.1997
(51) Int. Cl.: A01K 1/00

(54) **Dispositif de fixation de bat-flanc suspendus sur un écran frontal de logettes**
Vorrichtung zur Befestigung hängender Alkoventrennungen zu einer Vorderschirmwand
Device for fastening suspended cubicle partition to a frontal screen

(30) Priorité: 09.08.1996 FR 9610036
(43) Date de publication de la demande: 11.02.1998
(73) Titulaire: Etablissements Jourdain Société Anonyme, 45300 Pithiviers (FR)
(72) Inventeur: Jourdain, Martial Maurice Marcel, 45300 Escrennes (FR)
(74) Mandataire: Vander-Heym, Serge

(56) Documents cités:
- FR-A- 434 001
- GB-A- 1 380 414
- US-A- 3 802 392

## Description

La présente invention est relative à un dispositif de fixation de bat-flanc en vue de la réalisation de logettes pour bovins.

Un ensemble de logette est constitué par une barrière, ou écran frontal et par des bat-flanc régulièrement espacés. L'écran frontal est formé par des poteaux scellés dans le sol réunis par des lisses horizontales.

Pour imiter les scellements dans le sol on utilise actuellement la technique des bat-flanc suspendus, c'est-à-dire que chaque bat-flanc est fixé, par l'une de ses extrémités, sur l'écran frontal.

Ainsi, dans le document GB-A-1380414 est décrit un écran frontal, formé par des poteaux et des lisses, sur lequel on fixe un bat-flanc se présentant sous la forme d'un tube cintrée dont les extrémités sont boulonnées sur les lisses, présentant des perforations régulièrement espacées, à l'aide de colliers.

Cette technique de montage présente le principal inconvénient de nécesssiter, au moins, deux personnes, l'une pour présenter et maintenir le bat-flanc et, l'autre pour effectuer le boulonnage.

La présente invention, qui remédie à ces inconvénients, concerne un dispositif de fixation de bat-flanc suspendus, sur un écran frontal constitué par des poteaux et des lisses et est caractérisée en ce que l'une des extrémités de chaque bat-flanc présente, au moins, deux crochets s'ouvrant vers le bas et formant en combinaison avec l'extrémité du bat-flanc un étrier renverse susceptible d'être placé, à cheval, sur la lisse correspondante.

Un boulon, au moins, s'étendant sous la lisse et traversant la partie verticale du crochet et la platine du bat-flanc, permet de bloquer fermement ledit bat-flanc.

La présente invention sera mieux comprise par la description qui va suivre faite en se référant au dessin annexé à titre d'exemple indicatif, seulement, sur lequel :
- la figure 1 est une vue en élévation d'une logette usuelle;
- la figure 2 est une vue partielle, à plus grande échelle, montrant un bat-flanc modifié selon l'invention;
- la figure 3 est une vue, analogue à la figure 2, montrant le bat-flanc fixé sur l'écran frontal.

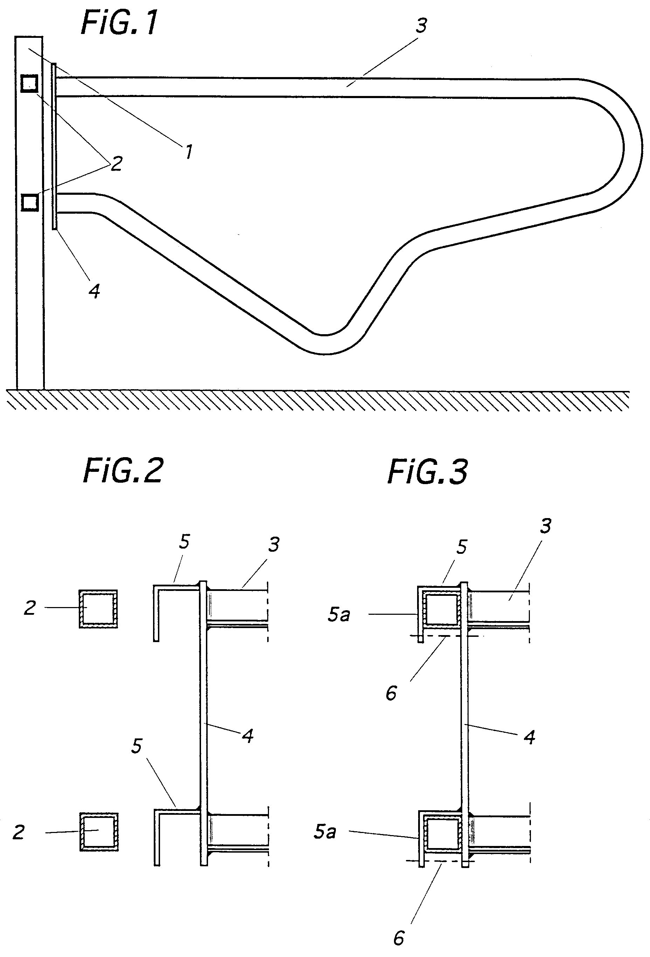

En se reportant à la figure 1, on voit qu'un ensemble de logettes est formé par un écran frontal, composé de poteaux 1 réunis par des lisses 2 horizontales, et par une pluralité de bat-flanc 3 , régulièrement espacés et s'étendant perpendiculairement audit écran frontal.

Dans l'exemple représenté, le bat-flanc est constitué par un tube cintré dans un plan et dont les extrémités sont réunies par une platine 4.

Le problème posé consiste de façon simple et à l'aide d'une seule personne de fixer le bat-flanc sur l'écran frontal.

Selon l'invention, ce résultat est obtenu en prévoyant sur la face externe de la platine 4 deux crochets 5, s'ouvrant vers le bas. Chaque crochet forme, en combinaison avec la platine, un étrier renversé susceptible d'être placé, à cheval sur la lisse correspondante.

Comme cela ressort de la figure 3, lorsque le bat-flanc est accroché sur les lisses il s'y maintient et la même personne peut, ensuite, effectuer le blocage.

Le blocage s'effectue en exerçant une pression qui tend à rapprocher l'aile verticale 5a du crochet et la platine 4.

Selon un mode de réalisation ce résultat peut être obtenu en utilisant, au moins un boulon, s'étendant sous la lisse et traversant l'aile 5a et la platine. Ce boulon est schématisé par l'axe 6 sur la figure 3.

## Revendications

1. Dispositif de fixation de bat-flanc suspendus sur un écran frontal de logettes constitué par des poteaux (1) et des lisses (2) horizontales, caractérisé en ce que l'une des extrémités de chaque bat-flanc (3) présente, au moins, deux crochets (5), s'ouvrant vers le bas et formant, en combinaison avec l'extrémité du bat-flanc un étrier renversé susceptible d'être placé, à cheval, sur la lisse-correspondante.

2. Dispositif selon la revendication 1, caractérisé en ce que des moyens sont prévus pour rapprocher l'aile verticale (5a) de chaque crochet de la platine (4), formant l'extrémité du bat-flanc.

3. Dispositif selon la revendication 2, caractérisé en ce que l'aile verticale (5a) de chaque crochet et la platine (4) sont traversées par, au moins, un boulon s'étendant sous la lisse correspondante.

## Claims

1. Device for fixing swinging bails suspended from a frontal screen of small boxes constituted by poles (1) and horizontal harnesses (2), characterised in that one of the ends of each swinging bail (3) has at least two hooks (5) opening downwards and, combined with the end of the swinging bail, forms a reverse stirrup able to be placed on horseback on the corresponding pole.

2. Device according to claim 1, characterised in that means are provided to bring closer the vertical wing (5a) of each hook of the plate (4) forming the end of the swinging bail.

3. Device according to claim 2, characterised in that the vertical wing (5a) of each hook and the plate (4) are crossed by at least one bolt extending under the corresponding harness.

## Patentansprüche

1. An einer frontalen, mit Aufnahmen ausgestatteten Abschirmung aufgehängte Befestigungsvorrichtung mit Trennbalken, bestehend aus Ständern (1) und horizontalen Litzen (2), dadurch gekennzeichnet, daß eines der äußeren Enden jedes Trennbalkens (3) wenigstens zwei Haken (5) aufweist, die sich nach unten hin öffnen und in Verbindung mit dem äußeren Ende des Trennbalkens einen umgedrehten dreiseitigen Bügel bilden, der geeignet ist, rittlings auf die entsprechende Litze gesetzt zu werden.

2. Vorrichtung gemäß Anspruch 1, dadurch gekennzeichnet, daß Mittel vorgesehen sind, um den vertikalen Flügel (5a) jedem Haken der Halteplatte (4), die das äußere Ende des Trennbalkens bildet, anzunähern.

3. Vorrichtung gemäß Anspruch 2, dadurch gekennzeichnet, daß der vertikale Flügel (5a) jedes Hakens und die Halteplatte (4) wenigstens von einem Bolzen durchbohrt sind, der unter der entsprechenden Litze verläuft.
